Europäisches Patentamt

European Patent Office

Office européen des brevets

(19)

(11) Veröffentlichungsnummer: **0 005 208**
**B1**

(12)

# EUROPÄISCHE PATENTSCHRIFT

(45) Veröffentlichungstag der Patentschrift:
25.11.81

(51) Int. Cl.³: **H 02 B 13/02**

(21) Anmeldenummer: 79101173.7

(22) Anmeldetag: 17.04.79

(54) **Elektrisches Schaltfeld.**

(30) Priorität: 28.04.78 DE 2818905

(43) Veröffentlichungstag der Anmeldung:
14.11.79 Patentblatt 79/23

(45) Bekanntmachung des Hinweises auf die Patenterteilung:
25.11.81 Patentblatt 81/47

(84) Benannte Vertragsstaaten:
CH DE FR GB IT SE

(56) Entgegenhaltungen:
DE-A-2 721 258
FR-A-1 343 521
US-A-3 025 375
US-A-3 571 543
GB-A-1 141 962
FR-A-2 254 131
DE-C-760 149
GB-A-604 331
GB-A-1 108 912
DE-B-1 180 447
DE-U-6 907 500
Sachsenwerk-Mittelungen Heft 3, 1928,
Seiten 10—18
Druckschrift der Fa. Hazemeyer-Magnefix MD,
Nr. 12-195 PR 38132 von 1964, Seite 10.

(73) Patentinhaber: SIEMENS AKTIENGESELLSCHAFT Berlin
und München, Postfach 22 02 61, D-8000 München 22 (DE)

(72) Erfinder: Adolph, Erich, Dantestrasse 3,
D-6000 Frankfurt/Main 1 (DE)
Erfinder: Bayrak, Ünal, Adalbert-Stifter-Strasse 45,
D-6451 Bischofsheim (DE)
Erfinder: Prohl, Robert, Welherstrasse 54,
D-6369 Nidderau (DE)
Erfinder: Schmidt, Gerhard Dipl.-Ing., In den Wingerten 1,
D-6100 Darmstadt-Wixhausen (DE)
Erfinder: Stecker, Walter, Berliner Strasse 6,
D-6056 Heusenstamm (DE)

BUNDESDRUCKEREI BERLIN

Elektrisches Schaltfeld

Die Erfindung bezieht sich auf ein elektrisches Schaltfeld nach dem Oberbegriff des Anspruches 1.

Es ist bereits ein elektrisches Mittelspannungs-Schaltfeld der im Oberbegriff des Anspruches 1 genannten Art bekannt (GB-PS 1 141 962).

Es ist auch bereits bekannt, in Schaltanlagen plattenförmige Schirme zwischen Stromanschlüssen zu verwenden (US-A 3 571 543).

Bei einem elektrischen Schaltfeld eine Luftisolation in einem zur Wartung zugänglichen Gehäuseteil und eine SF$_6$-Gasisolation im übrigen Gehäuse vorzusehen, ist aus der FR-PS 1 343 521 bekannt.

Rohrförmige Leistungsschaltergehäuse, auch mit unten liegendem getrennten Kabelanschlußgehäuse, sind ebenfalls bereits bekannt (FR-PS 2 254 131, DE-PS 760 149 und GB-PS 604 331).

Weiterhin ist bereits ein Vakuumschalter mit einem davon getrennt angeordneten Kabelanschlußkasten bekannt (GB-PS 1 108 912).

Kabelanschlußgehäuse mit Isolierstoffschirmen oder vergleichbare Kabelanschlußkästen sind bereits vorbeschrieben (DE-Gbm 6 907 500, Sachsenwerk-Mitteilungen H. 3, 1928, S. 10 bis 18).

Rohrförmige Schirme im Zusammenhang mit einem Kabelanschluß sind ebenfalls vorbeschrieben (Druckschrift der Fa. Hazemeyer-Magnefix MD, Nr. 12-195 PR 38 132, von 1964, Seite 10, DE-AS 1 180 447).

Es sind auch axial teilbare Schirme für sich bekannt (Calor-Emag-Mitteilungen, Heft I/II 1969, Seite 8 und 15 und niederländische Patentanmeldung Nr. 6 504 230).

Aufgabe der Erfindung ist es, das elektrische Schaltfeld der im Oberbegriff des Anspruches 1 genannten Gattung besonders kompakt sowie Material- und Raumsparend so auszubilden, daß es kurze Strompfade aufweist sowie ein geringes Isoliergasvolumen besitzt und dennoch insgesamt, insbesondere aber am Kabelanschluß, günstig zu warten ist.

Die gestellte Aufgabe wird erfindungsgemäß durch die im kennzeichnenden Teil des Anspruches 1 angegebene Merkmalskombination gelöst.

Durch die Verwendung des luftisolierten Untergestelles und der teilbaren Schirme wird der Kabelanschluß leicht zugängig. Zugleich wird das Isoliergasvolumen durch die luftisolierte Ausbildung des Untergestelles und des Aufsatzes erheblich vermindert. Die Gesamtanordnung erlaubt eine leichte Montage.

Zweckmäßige Aus- und Weiterbildungen des Erfindungsgegenstandes sind in den Ansprüchen 2 bis 10 angegeben.

Ein Ausführungsbeispiel des Erfindungsgegenstandes ist in der Zeichnung dargestellt. Es zeigt

Fig. 1 eine Frontansicht eines Schaltfeldes, teilweise im Schnitt,

Fig. 2 eine Seitenansicht des Schaltfeldes nach Fig. 1.

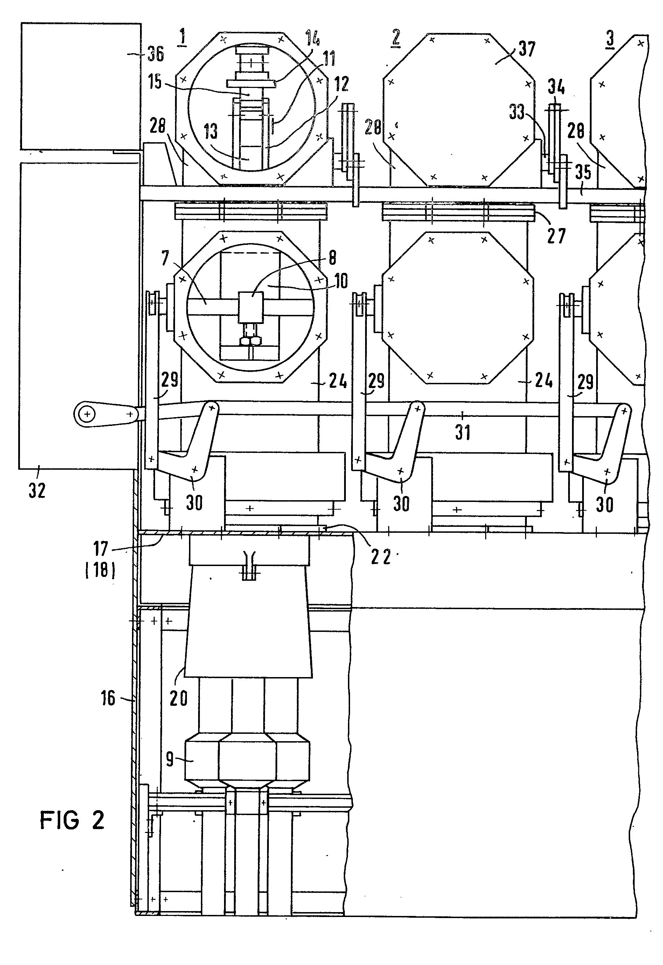

Das dargestellte Schaltfeld besitzt eine isoliergasgefüllte Metallkapselung und weist drei Phasen 1, 2, 3 auf (Fig. 2).

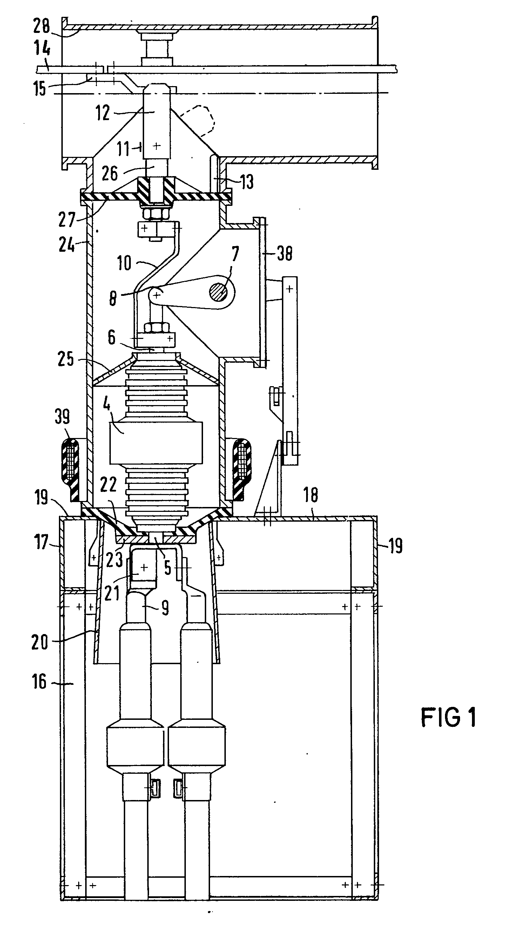

Das Innere einer Phase ist besonders aus Fig. 1 ersichtlich.

Die Metallkapselung umschließt pro Phase 1, 2, 3 mindestens eine Vakuumschaltröhre 4 mit einem axial ortsfesten Stromanschluß 5. Ferner besitzt die Vakuumschaltröhre 4 einen Stromanschluß 6, der mittels eines an einer aus der Kapselung herausgeführten Welle 7 angelenkten Hebels 8 axial beweglich ist.

Die Vakuumschaltröhre 4 steht einerseits mit einem Kabelanschluß 9 und andererseits über eine flexible Leitung 10 mit einem Trennschalter 11 in Verbindung.

Das bewegliche Schaltstück 12 des Trennschalters 11 ist innerhalb der Metallkapselung in ein mit der Metallkapselung verbundenes Erderkontaktstück 13 und in ein mit einer Sammelschiene 14 verbundenes Gegenkontaktstück 15 schwenkbar.

Der Kabelanschluß 9 ist in einem isoliergasfreien Untergestell 16 angeordnet, das allen Phasen 1, 2, 3 gemeinsam ist.

Das Untergestell 16 trägt einen allen Phasen 1, 2, 3 gemeinsamen, ebenfalls isoliergasfreien Aufsatz 17, der vorzugsweise in mindestens einer horizontalen Ebene montagefreundlich teilbar ist, beispielsweise in der Ebene, in der die Oberseite 18 liegt. Die Teilung kann hier am Übergang zwischen der Oberseite 18 und Seitenwände 19 erfolgen.

In den Aufsatz 17 ragen senkrecht gerichtete Schirme 20 hinein, die auch in das Untergestell 16 eingreifen. Die Schirme 20 sind vorzugsweise axial teilbar und umgeben im Untergestell 16 phasenweise Verschraubungen 21 der Kabelanschlüsse 9.

An ihrem oberen Ende sind die Schirme 20 an einer vom Aufsatz 17 getragenen Durchführungsplatte 22 lösbar befestigt. Auf der Unterseite dieser Durchführungsplatte 22 ist eine elektrisch leitende Platte 23 angeordnet. Auf der Oberseite der Durchführungsplatte 22 ruht unter Zwischenlage je einer Dichtung (nicht dargestellt) das dem ortsfesten Stromanschluß 5 zugewandte Ende der Vakuumschaltröhre 4. Ferner ruht auf der Oberseite der Durchführungsplatte 22 ein Ende eines aufrechten Behälters 24, der im vorliegenden Beispiel rohrförmig und als T-Stück ausgebildet ist.

Im Behälter 24 ist ein Isolierstoffteller 25 angeordnet, der die Vakuumschaltröhre 4 im Behälter 24 zentriert.

Oberhalb des Tellers 25 verbindet das Stromband 10 den beweglichen Anschluß 6 der Vakuumschaltröhre 4 mit einem senkrechten Bolzen 26.

2

Der Bolzen 26 durchgreift eine Schottplatte 27, die den aufrechten Behälter 24 oben gasdicht abschließt und in einen auf der Schottplatte 27 gasdicht angeordneten, querliegenden Behälter 28 ragt, der die Sammelschiene 14 enthält.

Der Behälter 28 ist vorzugsweise gleich dem aufrechten Behälter 24, also auch ein T-förmiges Rohr. Der senkrechte Abgang des Rohres ist der Schottplatte 27 zugewandt, in Längsrichtung des T-Balkens erstreckt sich die Sammelschiene 14. Wie auch der Behälter 24 besteht der Behälter 28 aus einem unmagnetischen Material, vorzugsweise Aluminium und ist Teil der Metallkapselung.

Im Behälter 28 trägt der Bolzen 26 den Trennschalter 11.

Das bewegliche Schaltstück 12 des Trennschalters 11 ist neben den schon genannten Schaltstellungen auch in eine zwischen dem Erderkontaktstück 13 und dem Gegenkontaktstück 15 liegende Trennstellung schwenkbar (gestrichelt angedeutet in Fig. 1).

Der Antrieb der Vakuumschaltröhre 4 ist insbesondere aus Fig. 2 ersichtlich.

Die schon erwähnte, aus der Kapselung herausgeführte Welle 7 trägt außerhalb der Kapselung einen Stößel 29.

Der Stößel 29 ist an seinem freien Ende mit einem Winkelhebel 30 verbunden. Die freien Hebel der Winkelhebel 30 aller Phasen 1, 2, 3 sind an einer gemeinsamen Schubstange 31 angelenkt, die zu einem Antriebskasten 32 geführt ist.

Der Antrieb des Trennschalters 11 ist wie folgt ausgebildet. Das bewegliche Schaltstück 12 des Trennschalters 11, im vorliegenden Falle ein Schaltmesser, ist mittels einer aus der Kapselung herausgeführten Drehwelle 33 (Fig. 2, Phase 2) schwenkbar. Die Drehwelle 33 greift unmittelbar am Schaltstück 12 an. Ferner ist die Drehwelle 33 innerhalb der Kapselung in der Art eines Stützers ausgebildet. Außerhalb der Kapselung trägt die Drehwelle 33 einen Verbindungshebel 34 (Fig. 2, Phase 2). Der Verbindungshebel 34 ist an einer allen Phasen 1, 2, 3 gemeinsamen Schaltwelle 35 angelenkt, die in den Antriebskasten 32 geführt ist.

Oberhalb des Antriebskastens 32 befindet sich ein Relaiskasten. Beide Kasten 32, 36 befinden sich als Schutzschild in der Feldfront.

Besonderheiten der Kapselung sind, daß die Enden des querliegenden Behälters 28, sofern sich an diesen nicht der Behälter eines weiteren Feldes anschließt, jeweils mit einem Deckel 37 (Fig. 2) verschlossen sind. Mindestens einer der Deckel kann mit einer Sollbruchstelle versehen sein (nicht dargestellt).

Der freie Abgang des aufrechten T-förmigen Behälters 24 ist mit einer Platte 38 verschlossen, die zweckmäßig ebenfalls eine Sollbruchstelle enthält (nicht dargestellt).

In nicht dargestellter Weise können mindestens die aufrechten Behälter 24 aller Phasen der Metallkapselung durch Leitungen verbunden sein, die zum Druckausgleich dienen.

Wie aus Fig. 1 ersichtlich, ruht der aufrechte Behälter 24 gegen den Aufsatz 17 isoliert auf der Durchführungsplatte 22. Hierdurch und im Hinblick darauf, daß der Behälter 24 aus einem magnetischen Material besteht, ist es möglich, einen ringförmigen Stromwandler 39 um den Behälter 24 anzuordnen. Um den Stromwandler 39 von Störeinflüssen freizuhalten, sind die Erderkontaktstücke 13 aller Phasen 1, 2, 3 nicht innerhalb sondern außerhalb der Kapselung und außerhalb des Wandlers 39 an eine gemeinsame Erderschiene angeschlossen, die mit dem Untergestell 16 in elektrischer Verbindung steht.

Im aufrechten Behälter 24 kann in nicht dargestellter Weise ein die Vakuumschaltröhre 4 konzentrisch umgreifender Spannungswandler angeordnet sein.

Patentansprüche

1. Elektrisches Schaltfeld, mit einer isoliergasgefüllten Metallkapselung, die pro Phase mindestens eine Vakuumschaltröhre (4) umschließt, welche von einem einen Teil der Metallkapselung bildenden aufrechten Behälter (24) umgeben und mittels eines Isolierstofftellers (25) im Behälter (24) zentriert ist sowie ferner einen ortsfesten Stromanschluß (5) und einen axial beweglichen Stromanschluß (6) aufweist, wobei der eine Stromanschluß über mindestens ein Zwischenglied mit einem Kabelanschluß und der andere Stromanschluß über eine flexible Leitung (10) mit einem Sammelschienen-Trennschalter (11) in elektrischer Verbindung steht, der sich in einem, mit dem aufrechten Behälter (24) verbundenen, die Sammelschiene (14) enthaltenden Behälter (28) befindet sowie in ein Erderkontaktstück (13) und in ein mit der Sammelschiene (14) verbundenen Gegenkontaktstück schwenkbar ist, gekennzeichnet durch die Kombination der Merkmale, daß der gesamte Kabelanschluß in einem luftisolierten, allen Phasen gemeinsamen Untergestell (16) angeordnet ist; daß das Untergestell (16) einen allen Phasen gemeinsamen, ebenfalls luftisolierten Aufsatz (17) trägt; daß in den Aufsatz (17) lotrecht gerichtete, axial teilbare Schirme (20) hineinragen die auch in das Untergestell (16) eingreifen, phasenweise aus der bzw. den Kabelklemmen (9) und einem Anschlußbügel (21) bestehende Anschlußverschraubungen umgeben und an ihrem oberen Ende an einer vom Aufsatz (17) getragenen Durchführungs-Platte (22) lösbar befestigt sind; daß auf der Unterseite der Durchführungs-Platte (22) ferner eine mit dem Anschlußbügel (21) verbundene, elektrisch leitende Platte (23) angeordnet ist und auf der Oberseite der Durchführungs-Platte (22), unter Zwischenlage je einer Dichtung, mittig das den ortsfesten Stromanschluß (5) aufweisende Ende der Vakuumschaltröhre (4) und am Randbereich das untere Ende des aufrechten Behälters (24) angebrachten ist und daß die flexible Leitung (10) den beweglichen Anschluß der Vakuumschaltröhre (4) mit einem senkrechten Bolzen (26) verbindet, der eine den aufrechten Behälter (24) oben gasdicht abschließende Schottplatte (27) aus Isolierstoff durchgreift, in den die Sammelschiene (14) enthaltenden Behälter (28) ragt sowie dort den Trennschalter trägt; und daß der Trennschalter (11) in eine zwischen dem Erderkontaktstück (13) und dem Gegenkontaktstück (15) liegende Trennstellung schwenkbar ist.

2. Schaltfeld nach Anspruch 1, dadurch gekennzeichnet, daß die Schirme (20) axial teilbar sind.

3. Schaltfeld nach einem der vorhergehenden Ansprüche, dadurch gekennzeichnet, daß der Aufsatz (17) in mindestens einer horizontalen Ebene montagefreundlich teilbar ist.

4. Schaltfeld nach einem der vorhergehenden Ansprüche, dadurch gekennzeichnet, daß der aufrechte Behälter (24) und der quer liegende Behälter (28) der Kapselung gleich ausgebildet sind.

5. Schaltfeld nach einem der vorhergehenden Ansprüche, dadurch gekennzeichnet, daß die aus der Kapselung herausgeführte Welle (7) außerhalb der Kapselung einen Stößel (29) trägt, der am freien Ende mit einem Winkelhebel (30) verbunden ist und die freien Hebel der Winkelhebel (30) aller Phasen an einer gemeinsamen Schubstange (31) angelenkt sind, die zu einem Antriebskasten (32) geführt ist.

6. Schaltfeld nach einem der vorhergehenden Ansprüche, wobei das Schaltstück des Trennschalters mittels einer aus der Kapselung herausgeführten Drehwelle schwenkbar ist, dadurch gekennzeichnet, daß das bewegliche Schaltstück (12) des Trennschalters (11) als Schaltmesser ausgebildet ist und die Drehwelle (33) unmittelbar am Schaltstück (12) angreift, innerhalb der Kapselung in der Art eines Stützers ausgebildet ist sowie außerhalb der Kapselung einen Verbindungshebel (34) trägt, der an einer allen Phasen gemeinsamen Schaltwelle (35) angelenkt ist, die in den Antriebskasten (32) geführt ist.

7. Schaltfeld nach einem der vorhergehenden Ansprüche, dadurch gekennzeichnet, daß die Enden des querliegenden Behälters (28) der Metallkapselung jeweils mit einem Deckel (37) verschlossen sind und mindestens einer der Deckel (37) eine Sollbruchstelle aufweist und daß in einer einen Abgang des aufrechten Behälters (24) verschließenden Platte (38) ebenfalls eine Sollbruchstelle angeordnet ist.

8. Schaltfeld nach einem der vorhergehenden Ansprüche, dadurch gekennzeichnet, daß mindestens die aufrechten Behälter (24) aller Phasen der Metallkapselung durch zum Druckausgleich ausgebildete Leitungen verbunden sind.

9. Schaltfeld nach einem der vorhergehenden Ansprüche, dadurch gekennzeichnet, daß der aufrechte Behälter (24) gegen den Aufsatz (17) isoliert auf der Durchführungsplatte (22) ruht sowie von einem Stromwandler (39) umgeben ist und daß an die Erderkontaktstücke (13) aller Phasen (1, 2, 3) außerhalb der Kapselung eine gemeinsame, mit dem Untergestell verbundene Erderschiene angeschlossen ist.

10. Schaltfeld nach einem der vorhergehenden Ansprüche, dadurch gekennzeichnet, daß im aufrechten Behälter (24) ein die Vakuumschalt-röhre (4) konzentrisch umgreifender Spannungs-wandler angeordnet ist.

**Claims**

1. An electrical switching array, comprising a metal capsule which is filled with insulating gas and which, for each phase, encloses at least one vacuum switch tube (4) surrounded by an upright container (24) forming part of the metal capsule and centred in the container (24) by means of an insulating dish (25), and which also possesses a fixed current terminal (5) and an axially moveable current terminal (6), where one current terminal is connected via at least one intermediate component to a cable terminal and the other current terminal is electrically connected via a flexible line (10) to a busbar isolating switch (11) that is arranged in a container (28) which contains the busbar (14) and is coupled to the upright container (24), characterised in that the following features are combined; that the entire cable terminal is arranged in an air-insulated subframe (16) common to all phases, that the sub-frame (16) bears an airinsulated attachment (17) which is common to all phases, that perpendicularly directed, axially divisible screens (20) project into the attachment (17) to similarly engage in the sub-frame (16) and surround connecting screw units in phasewise manner for the or each cable terminal (9) and a connecting clip (21), and at their upper end are detachably secured to a lead-in plate (22) which is supported by the attachment (17); that on the unterneath of the lead-in plate (22) there is also arranged an electrically conductive plate (23) which is connected to the connecting clip (21), and on the upper side of the lead-in plate (22) that end of the vacuum switch tube (4) which has the fixed current terminal (5) is arranged centrally, and the lower end of the upright container (24) is arranged in the border area with an interposed seal in each case.

2. A switching array as claimed in Claim 1, characterised in that the screens (20) are axially divisible.

3. A switching array as claimed in one of the preceding Claims, characterised in that the attachment (17) is divisible in at least one horizontal plane in a manner to facilitate assembly.

4. A switching array as claimed in one of the preceding Claims, characterised in that the upright container (24) and the transversely arranged capsule container (28) are of identical design.

5. A switching array as claimed in one of the preceding Claims, characterised in that the shaft (7) which leads out of the capsule bears, outside of the capsule, a tappett (29) having a free end connected to an angular lever (30), and the free levers of the angular levers (30) of all phases are articulated to a common push rod (31) which leads to a gear box (32).

6. A switching array as claimed in one of the preceding Claims, wherein the switching component of the isolating switch can be pivoted by means of a rotary shaft which leads out of the capsule, characterised in that the moveable switching component (12) of the isolating switch (11) consists of a switching blade and the rotary shaft (33) acts directly on the switching component (12), being designed in the form of a support within the capsule, and bearing a connecting lever (34) outside of the capsule which is articulated to a switching shaft (35) common to all phases and leading to the gearbox (32).

7. A switching array as claimed in one of the preceding Claims, characterised in that the ends of the transverse container (28) of the metal capsule are each closed off by a cover (37) and at least one of the covers (37) possesses an intentional fracture point, and that a plate (38) which closes off an outlet of the upright container (24) likewise contains an intentional fracture point.

8. A switching array as claimed in one of the preceding Claims, characterised in that at least the upright containers (24) of all phases of the metal capsule are connected by lines designed to compensate pressure.

9. A switching array as claimed in one of the preceding Claims, characterised in that the upright container (24) rests on the lead-in plate (22) insulated from the attachment (17), and is surrounded by a current transformer (39), and that a common ground bar is connected to the ground contact components (13) of all phases (1, 2, 3) outside of the capsule.

10. A switching array as claimed in one of the preceding Claims, characterised in that a voltage transformer which concentrically embraces the vacuum switch tube (4) is arranged in the upright container (24).

**Revendications**

1. Cellule de coupûre électrique, du type comportant un blindage métallique comprenant, par phase, au moins un tube de commutation à vide (4), entouré par une enveloppe droite (24) qui forme une partie du blindage et centré dans l'enveloppe (24) au moyen d'un plateau (25) en un matériau isolant, ainsi qu'une bande de raccordement fixe (5) et une bande de raccordement (6) mobile axialement, l'une des bornes de raccordement étant reliée par l'intermédiaire d'au moins un élément intermédiaire à un raccord de câble et l'autre borne de raccordement étant reliée électriquement, par l'intermédiaire d'un conducteur flexible (10), à un sectionneur d'isolement des barres (11) qui se trouve dans une enveloppe (28) contenant la barre (24) et reliée à l'enveloppe droite, caractérisée par la combinaison des caractéres distinctifs que la totalité du raccord de câble est disposée dans un socle (16) isolé par rapport à l'air et commun à toutes les phases; que le socle (16) porte une pièce rapportée (17) également isolée par rapport à l'air et commune à toutes les phases; que dans la pièce rapportée (17) pénètrent des écrans verticaux (20) susceptibles d'êrte divisés axialement et qui passent dans le socle (16) et enrourent la boulonnerie de raccordement constituée, par phase par la ou les bornes de câble (9) et par un étrier de raccordement (21), lesdits écrans étant fixés de façon amovible par leur extrémité supérieure, à une plaque de traversée (22) portée par la pièce rapportée (17), que sur la face inférieure de la plaque de traversée (22) est en outre prévue une plaque électriquement conductrice (23), reliée à l'étrier de raccordement alors que sur la face supérieure de la plaque de traversée (22) et avec interposition d'une garniture de joint, est fixée en position médiane l'extrémité du tube de commutation (4) comportant la borne de raccordement fixe (5) et dans la partie périphérique l'extrémité inférieure de l'enveloppe droite (24).

2. Cellule de coupure selon la revendication 1, caractérisée par le fait que les écrans (20) sont susceptibles d'être subdivisés axialement.

3. Cellule de coupure selon l'une des revendications antérieures, caractérisée par le fait que la pièce rapportée (17) est susceptible d'être subdivisée, pour un montage facile, dans au moins un plan horizontal.

4. Cellule de coupure selon l'une des revendications précédentes, caractérisée par le fait que l'enveloppe droite (24) et l'enveloppe transversale (28) du blindage sont réalisées de façon analogue.

5. Cellule de coupure selon l'une des revendications précédentes, caractérisée par le fait que l'arbre (7) qui sort du blindage porte, à l'extérieur du blindage, un poussoir (29) qui est relié à l'extrémité libre avec un levier coudé (30), les bras libres des liviers coudés (30) de toutes les phases étant articulés à une bielle commune (31) qui mène une boîte de commande (32).

6. Cellule de coupure selon l'une des revendications précédentes, du type dans lequel la pièce de contact de l'interrupteur de sectionnement est susceptible d'être basculée à l'aide d'un arbre tournant sortant du blindage, caractérisée par le fait que la pièce de contact mobile (12) de l'interrupteur de sectionnement (11) est réalisée sous la forme d'un couteau de sectionnement et l'arbre tournant (33) attaque directement la pièce de contact (12), il est réalisé à l'intérieur du blindage sous la forme d'un support isolant et porte à l'extérieur du blindage un levier de liaison (34) qui est articulé à un arbre de commutation (35) commun à toutes les phases et qui mené jusqu'à la boîte de commande (32).

7. Cellule de coupure selon l'une des revendications précédentes, caractérisée par le fait que les extrémités de l'enveloppe transversale (28) du blindage métallique sont chacune fermées par un couvercle (37), au moins l'un des couvercles (37) comportant un emplacement de rupture, et par le fait que dans une plaque (38) qui ferme une sortie de l'enveloppe droite (24) est également prévu un emplacement de rupture.

8. Cellule de coupure selon l'une des revendications précédentes, caractérisée par le fait qu'au moins les enveloppes droites (24) de toutes les phases du blindage sont reliées par des conduites conçues pour un équilibrage de la pression.

9. Cellule de coupure selon l'une des revendications précédentes, caractérisée par le fait que l'enveloppe droite (24) repose contre la pièce rapportée (17) de façon isolée sur la plaque de traversée (22) et est entourée par un transformateur de courant (39), et qu'aux pièces de contact de terre (13) de toutes les phases (1, 2, 3) et à l'extérieur du blindage, est reliée une barre de terre qui est reliée au socle.

10. Cellule de coupure selon l'une des revendications précédentes, caractérisée par le fait que dans l'enveloppe droite (24) est disposé un transformateur de tension entourant concentriquement le tube de commutation à vide (4).

FIG 1

FIG 2